(19) Europäisches Patentamt
European Patent Office
Office européen des brevets

(11) Publication number: 0 033 016
B2

(12) # NEW EUROPEAN PATENT SPECIFICATION

(45) Date of publication of the new patent specification: 10.01.90

(51) Int. Cl.⁴: C 08 J 9/08

(21) Application number: 80108224.9

(22) Date of filing: 27.12.80

(54) **Process of foaming a resinous polymer containing anhydride groups.**

(30) Priority: 04.01.80 US 109933

(43) Date of publication of application: 05.08.81 Bulletin 81/31

(45) Publication of the grant of the patent: 28.05.86 Bulletin 86/22

(45) Mention of the opposition decision: 10.01.90 Bulletin 90/2

(84) Designated Contracting States: BE CH DE FR GB IT LI NL SE

(56) References cited:
EP-A- 0 001 666
DE-A- 2 027 985
FR-A- 1 163 471
FR-A- 1 360 879
GB-A- 1 086 070
US-A- 1 088 383
US-A- 3 406 230
US-A- 3 537 885

The file contains technical information submitted after the application was filed and not included in this specification

(73) Proprietor: THE DOW CHEMICAL COMPANY, 2030 Dow Center Abbott Road P.O. Box 1967, Midland Michigan 48640-1967 (US)

(72) Inventor: Corbett, John Marvin, 781 Jonathan Lane, Newark, Ohio (US)

(74) Representative: Hann, Michael, Dr. et al, Patentanwälte Dr. Michael Hann Dr. H.-G. Sternagel Sander Aue 30, D-5060 Bergisch Gladbach 2 (DE)

EP 0 033 016 B2

## Description

Synthetic resins of thermoplastic foams in many instances are prepared by the extrusion of heat plastified gel containing organic blowing agents such as low boiling hydrocarbons or halogen containing compounds such as methyl chloride and various fluorine containing compounds. On extrusion of a mobile gel containing such blowing agents into a region of lower pressure, the blowing agent causes the gel to foam. During this process the blowing agent is frequently released to the atmosphere providing a flammability hazard if hydrocarbons are employed, or a potential toxicity problem if a halo compound is used. Often-times such blowing agents act as plastifiers for the polymer with the result that less desirable heat distortion properties are obtained. Generally in the extrusion of such thermoplastic foams with volatile organic fluid blowing agents, it is necessary that the mobile gel be prepared in a relatively complex equipment capable of withstanding high internal pressures.

An improved method for the preparation of synthetic resinous thermoplastic foams having desirable heat distortion characteristics and releasing no undesirable gases to the atmosphere can be obtained using an anhydride-containing thermoplastic polymer and certain ammonium salts.

This form is prepared by a method of preparation of an extruded closed cell foam of a synthetic resinous thermoplastic resin which is a copolymer of an ethylenically unsaturated carboxylic cyclic anhydride and an ethylenically unsaturated addition polymerizable monomer, wherein the resin in admixture with a blowing agent is heat plastified under pressure, extruded into a zone of lower pressure wherein an ammonium salt blowing agent in an amount from 0.5 to 20 parts by weight per 100 parts by weight of polymer provides gas pressure within the gel to form a plurality of closed cells within the gel, and subsequently the foamed mobile gel is cooled to a temperature below its heat plastification temperature, characterized in that, the heat plastifiable resin is an ethylenic addition polymer of mer units having the general formula

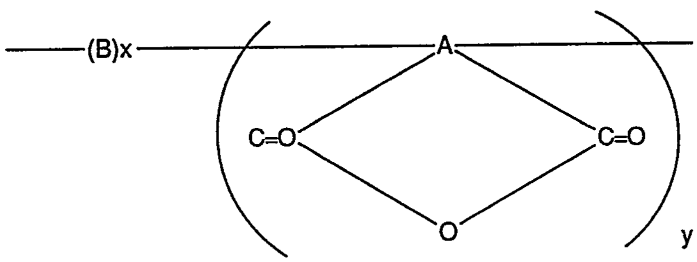

wherein A is at least one tetravalent organic radical, having a first pair of valences on vicinal carbon atoms attached to the carbonyl groups, and a second pair of valences on vicinal carbon atoms forming part of the polymer chain and arising from addition polymerization of 2 to 30 weight percent based on the weight of the polymer of an ethylenically unsatured dicarboxylic acid cylic anhydride, B is the polymerized mer unit corresponding to at least one ethylenically unsaturated addition polymerizable monomer, and x and y are numbers such that the ratio represents the average proportion on a mole basis of the respective mer units in the polymer, and the sum represents the average degree polymerization in the polymer, and as blowing agent ammonium carbonate, ammonium bicarbonate, ammonium oxalate or mixtures thereof and the foam is a closed cell foam containing maleimide groups as determined by infrared spectroscopy.

Polymers suitable for the practice of the present invention are prepared from ethylenically unsaturated monomers the polymerization of which provide polymers that contain from about 2 to 30 weight percent of an ethylenically unsaturated dicarboxylic acid cyclic anhydride.

The ethylenically unsaturated addition polymerizable monomers, from which mer units B are derived, include aliphatic and aromatic hydrocarbons and derivatives thereof having at least one polymerizable ethylenic group, including olefinic monomers such as ethylene and propylene, substituted olefinic monomers such as vinyl chloride, and vinyl acetate, styrenic monomers such as styrene, vinyltoluene, and methylstyrene and arhalostyrenes, acrylic monomers such as acrylic acid, methacrylic acid, ethyl acrylate and other alkyl acrylates, methyl methacrylate and other alkyl methacrylates and aryl acrylates and methacrylates, acrylonitrile, methacrylonitrile and acrylamide.

The ethylenically unsaturated dicarboxylic acid cyclic anhydride monomers, from the mer units that include the radical A are derived, include those having the general formula

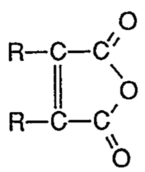 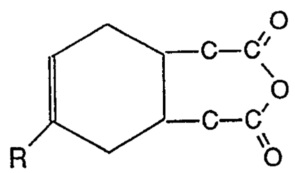 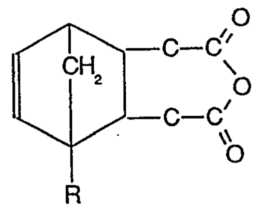 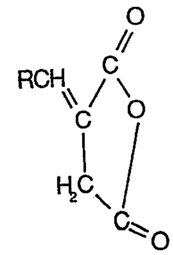

wherein R is hydrogen, alkyl, aryl, halo and other substituent radicals. Illustrative examples of such anhydrides are:
maleic anhydride
citraconic anhydride
itaconic anhydride
phenyl maleic anhydride
tetrahydrophthalic anhydride
bicyclo (2.2.1) hept-5-ene-2,3-dicarboxylic acid anhydride

The preparation of such polymers is well known. Blowing agents suitable for the practice of the present invention are ammonium carbonate, ammonium bicarbonate and ammonium oxalate and mixtures thereof. The solid blowing agents are at levels of from 0.5 to 20 parts by weight/per hundred parts by weight of polymer (pph)-and beneficially from 2 to 10 pph depending on the density of the foam desired. Such blowing agents may be used alone or in conjunction with volatile fluorocarbons such as:
fluorothrichloromethane
dichlorodifluoromethane
fluorodichloromethane
chlorodifluoromethane
chlorodifluoromethane
dichlorototetrafluoroethane
chloropentafluoroethane
difluoropropane
octafluorocyclobutane

The presence of such fluorocarbons within the cells results in reduced heat transfer through the foam plastic body. Foams in accordance with the present invention are readily prepared using a screw extruder. Generally, it is desirable to dry blend or admix particulate polymer resin with a particulate blowing agent prior to addition to the screw extruder. Extrusion temperatures suitable for the preparation of foam in accordance with the present invention are approximately the temperature at which the polymer would be extruded if no blowing agent is employed.

Preferably the copolymer is a styrene maleic anhydride copolymer and the foam is white and has a uniform cell structure.

The invention is illustrated by the following examples:

Example 1

A dry blend was prepared by mixed the following ingredients at room temperature for 90 minutes in a Hobart Model N-50 mixer. 400 grams of a styrene maleic anhydride copolymer which was a 21.7 weight percent maleic anhydride having a solution of viscosity of 4.97 m Pas as a 10 weight percent of polymer dissolved in methyl ethyl ketone, 1.32 grams of a resinous binder which is a 1 to 1 by weight mixture of a low molecular weight polystyrene and dibutyl phthalate, 4 grams of talc and 20 grams of ammonium bicarbonate. The resultant blend was extruded employing a Brabender Type 2003, 3⁄4″ (19.0 mm) screw extruder with the screw having a length/diameter ratio of 20 to 1. The peripheral temperature of the extruder is maintained at 210°C and the die temperature 165°C. The die pressure is about (1000 pounds per square inch gauge) 68.9 bar. The die had an aperture 1⁄4″ (6.3 mm) in diameter. The resultant foam was white, uniform cell structure and had a density of (3.4 pounds per cubic foot) 38.4 g/l. A portion of the foam was analyzed by infrared spectroscopy and showed evidence of the maleimide structure.

Example 2

Procedure of Example 1 was repeated with the exception that the 20 grams of ammonium bicarbonate was replaced with 20 grams of ammonium carbonate. The resultant foam had a desirable color, uniform cell structure and a density of (9.3 pounds per cubic foot) 148.8 g/l.

Similar beneficial results are obtained when ammonium oxalate is used in place of ammonium carbonate or ammonium bicarbonate and the foams obtained in accordance with the present in invention have desirably higher heat distortion temperatures and improved solvent resistance.

## Claims

1. A method of the preparation of an extruded closed cell foam of a synthetic resinous thermoplastic resin which is a copolymer of an ethylenically unsaturated carboxylic cyclic ànhydride and an ethylenically unsaturated addition polymerizable monomer, wherein the resin in admixture with a blowing agent is heat plastified under pressue, extruded into a zone of lower pressure wherein an ammonium saltblowing agent in an amount from 0.5 to 20 parts by weight per 100 parts by weight of polymer provides gas pressure within the gel to form a plurality of closed cells within the gel, and subsequently the foamed mobile gel is cooled to a temperature below its heat plastification temperature, characterized in that, the heat plastifiable resin is an ethylenic addition polymer of mer units having the general formula

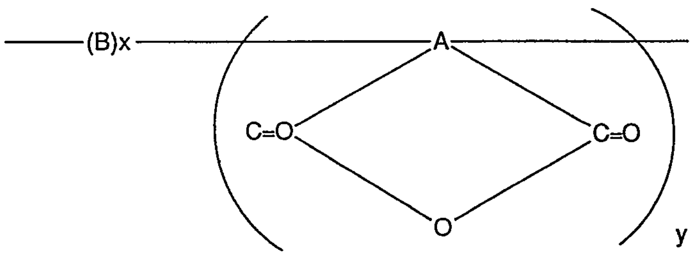

wherein A is at least one tetravalent organic radical, having a first pair of valences on vicinal carbon atoms attached to the carbonyl groups, and a second pair of valences on vicinal carbon atoms forming part of the polymer chain and arising from addition polymerization of 2 to 30 weight percent based on the weight of the polymer of an ethylenically unsatured dicarboxylic acid cyclic anhydride, B is the polymerized mer unit corresponding to at least one ethylenically unsaturated addition polymerizable monomer, and x and y are numbers such that the ratio represents the average proportion on a mole basis of the respective mer units in the polymer, and the sum represents the average degree of polymerization in the polymer, and as blowing agent ammonium carbonate, ammonium bicarbonate, ammonium oxalate or mixtures thereof and the foam is a closed cell foam containing maleimide groups as determined by infrared spectroscopy.

2. The method of claim 1, wherein mer A is maleic anhydride.

3. The method of claim 1 or 2, wherein mer B is styrene.

4. The method of claims 1 to 3 wherein the blowing agent is ammonium bicarbonate.

5. The method of claims 1 to 4 wherein the ammonium salt blowing agent is used in conjunction with chlorodifluoroethane.

6. The method of claims 1 to 5 wherein the resin is blended with blowing agent and the mixture heat plastified in a screw extruder.

7. An improved extrudedclosed cell resinous foam prepared from a thermoplastic ethylenic addition copolymer of an ethylenically unsaturated carboxylic cyclic anhydride and an ethylenically unsatured addition polymerizable monomer by heat plastifying the polymer in the presence of 0.5 to 20 parts by weight per 100 parts by weight of polymer of an ammonium salt blowing agent, characterized in that, the ethylenic addition polymer essentially consists of mer units having the general formula:

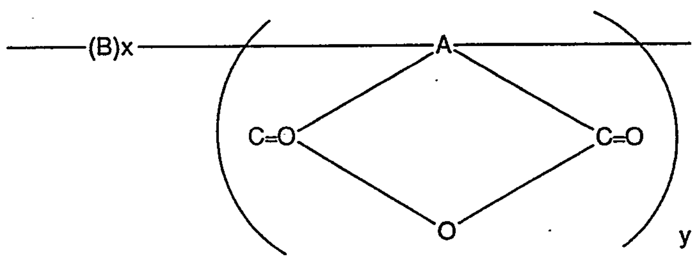

wherein A is at least one tetravalent organic radical having a first pair of valences on vicinal carbon atoms attached to the carbonyl groups and a second pair of valences on vicinal carbon atoms forming part of the polymer chain and arising form addition polymerization of 2 to 30 weight percent based on the weight of the polymer of an ethylenically unsaturated dicarboxylic acid cylcic anhydride, B is the polymerized mer unit corresponding to at least one ethylenically unsatureated addition polymerizable monomer, and x and y are numbers such that the ratio thereof represents the average proportion on a mole basis of the respective mer units in the polymer and the sum therof represents the average degree of polymerization on the polymer and the blowing agent consisting of ammonium carbonate, ammonium bicarbonate, ammonium oxalate or mixtures thereof, the foam is closed cell foam containing maleimide groups as determined by infrared spectroscopy.

8. The foam of claim 7 wherein A is maleic anhydride.

9. The foam of claim 7 or 8 wherein mer B is styrene.

10. The foam of claims 8 and 9 wherein the copolymer is a styrene maleic anhydride copolymer and the foam is white and has a uniform cell structure.

**Patentansprüche**

1. Verfahren zum Herstellen eines extrudierten, geschlossenzelligen Schaumes aus einem synthetischen harzartigen thermoplastischen Harz, das ein Copolymer eines zyklischen Anhydrids einer ethylenisch ungesättigten Carbonsäure und eines additionspolymerisierbaren, ethylenisch ungesättigten Monomers ist, bei dem das Harz in Mischung mit einem Treibmittel unter Druck durch Wärme plastisch gemacht wird, in eine Zone niedrigeren Druckes extrudiert wird,

wobei ein Ammoniumsalz als Treibmittel in einer Menge von 0,5 bis 20 Gew.-Teilen pro 100 Gewichtsteile Polymer einen Gasdruck im Gel erzeugt, um eine Vielzahl geschlossener Zellen im Gel zu bilden und bei dem das aufgeschäumte bewegliche Gel anschliessend auf eine Temperatur unterhalb seiner Wärmeerweichungstemperatur abgekühlt wird, dadurch gekennzeichnet, dass das durch Wärme plastifizierbare Harz ein ethylenisches Additionspolymer mit MER-Einheiten der allgemeinen Formel

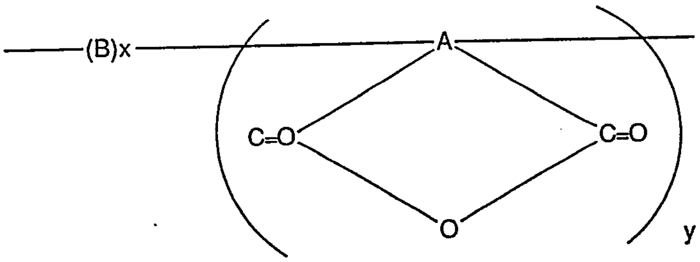

ist, in der A mindestens ein vierwertiger organischer Rest ist mit einem ersten Paar von Bindungen an mit den Carbonylgruppen verbundenen, benachbarten Kohlenstoffatomen und einem zweiten Paar von Bindungen an benachbarten Kohlenstoffatomen, die einen Teil der Polymerkette bilden, und aus der Additionspolymerisation von 2 bis 30 Gew.-%, bezogen auf das Gewicht des Polymeren eines zyklischen Anhydrids einer ethylenisch ungesättigten Dicarbonsäure stammen, B die polymerisierte MER-Einheit ist, die mit mindestens einem ethylenisch ungesättigten additionspolymerisierbaren Monomeren übereinstimmt, und x und y Zahlen sind, so dass ihr Verhältnis das mittlere Verhältnis auf einer Molbasis der betreffenden MER-Einheiten im Polymeren wiedergibt und die Summe den mittleren Polymerisationsgrad des Polymeren wiedergibt und Ammoniumcarbonat, Ammoniumbicarbonat, Ammoniumoxalat oder Mischungen derselben als Treibmittel, und der Schaum ein geschlossenzelliger Schaum ist, der durch IR Spektroskopie festgestellte Maleimidgruppen enthält.

2. Verfahren nach Anspruch 1, dadurch gekennzeichnet, dass MER A Maleinsäureanhydrid ist.

3. Verfahren nach Anspruch 1 oder 2, dadurch gekennzeichnet, dass MER B Styrol ist.

4. Verfahren nach Ansprüchen 1 bis 3, dadurch gekennzeichnet, dass das Treibmittel Ammoniumbicarbonat ist.

5. Verfahren nach Ansprüchen 1 bis 4, dadurch gekennzeichnet, dass das Ammoniumsalztreibmittel zusammen mit Chlordifluorethan verwendet wird.

6. Verfahren nach Ansprüchen 1 bis 5, dadurch gekennzeichnet, dass das Harz mit dem Treibmittel gemischt und die Mischung in einem Schneckenextruder durch Wärme plastifiziert wird.

7. Verbesserter extrudierter geschlossenzelliger harzartiger Schaum, hergestellt aus einem thermoplastischen, ethylenischen Additionscopolymeren eines zyklischen Anhydrids einer ethylenisch ungesättigten Carbonsäure und eines ethylenisch ungesättigten additionspolymerisierbaren Monomeren durch Plastischmachen des Polymeren durch Wärme in Gegenwart von 0,5 bis 20 Gewichtsteilen pro 100 Gewichtsteile Polymer eines Ammoniumsalztreibmittels, dadurch gekennzeichnet, dass das ethylenische Additionspolymer im wesentlichen besteht aus MER-Einheiten der allgemeinen Formel

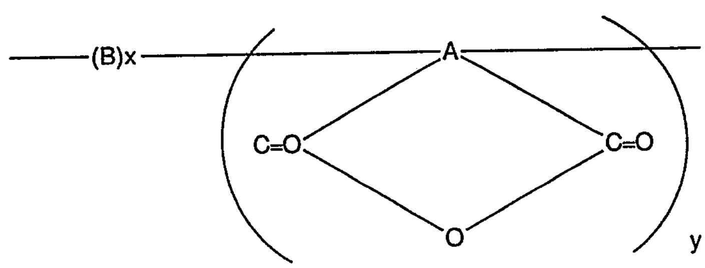

in der A mindestens ein vierwertiger organischer Rest ist mit einem ersten Paar von Bindungen an mit den Carbonylgruppen verbundenen, benachbarten Kohlenstoffatomen und einem zweiten Paar von Bindungen an benachbarten Kohlenstoffatomen, die einen Teil der Polymerkette bilden und hergestellt sind durch Additionspolymerisation von 2 bis 30 Gew.-%, bezogen auf Gewicht des Polymeren eines zyklischen Anhydrids einer ethylenisch ungesättigten Dicarbonsäure, B die polymerisierte MER-Einheit ist, die mit mindestens einem additionspolymerisierbaren, ethylenisch ungesättigten Monomer übereinstimmt, und x und y Zahlen sind, so dass ihr Verhältnis das mittlere Verhältnis auf einer Molbasis der betreffenden MER-Einheiten im Polymer wiedergibt und ihre Summe den mittleren Polymerisationsgrad des Polymeren wiedergibt und das Treibmittel aus Ammoniumcarbonat, Ammoniumbicarbonat, Ammoniumoxalat oder Mischungen derselben besteht und der Schaum ein geschlossenzelliger Schaum ist, der durch IR Spektroskopie festgestellte Maleimidgruppen enthält.

8. Schaum nach Anspruch 7, dadurch gekennzeichnet, dass MER A Maleinsäureanhydrid ist.

9. Schaum nach Anspruch 7 oder 8, dadurch gekennzeichnet, dass MER B Styrol ist.

10. Schaum nach Ansprüchen 8 und 9, dadurch gekennzeichnet, dass das Copolymer Styrol/Maleinsäureanhydridcopolymer ist und der Schaum weiss ist und eine gleichmässige Zellstruktur aufweist.

**Revendications**

1. Procédé de préparation d'une mousse extrudée à alvéoles fermés, constituée d'une résine thermoplastique résineuse synthétique qui est un copolymère d'un anhydride cyclique d'acide carboxylique à insaturation éthylénique et d'un monomère à insaturation éthylénique et polymérisable par addition, dans lequel la résine en mélange avec un agent porogene est plastifiée à chaud sous pression, extrudée dans une zone de plus basse pression dans laquelle un agent porogène de type sel d'ammonium, présent à raison de 0,5 à 20 parties en poids pour 100 parties en poids de polymère, fournit une pression de gaz à l'intéreur du gel pour former un grand nombre d'alvéoles fermés dans le gel, et ensuite le gel mobile moussé est refroidi à une température inférieure à sa température de plastification à la chaleur, caractérisé en ce que la résine plastifiable à la chaleur est un polymère éthylénique d'addition avec des motifs répondant à la formule générale

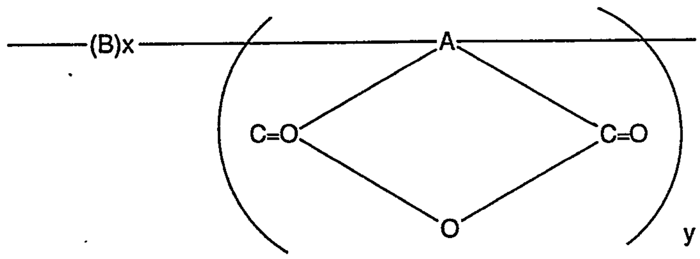

dans laquelle A est au moins un radical organique tetravalent possédant une première paire de valences sur des atomes de carbone voisins fixes aux groupes carbonyle et une seconde paire de valences sur des atomes de carbone voisins faisant partie de la chaine polymere et provenant de la polymérisation par additon de 2 à 30 pour cent en poids, par rapport au poids du polymère, d'un anhydride cyclique d'un acide dicarboxylique à insaturation éthylénique, B est le motif polymérisé correspondant à au moins un monomere à insaturation éthylénique polymérisable par addition, et x et y sont des nombres tels que leur rapport représente la proportion moyenne sur une base molaire des motifs respectifs dans le polymère et leur somme représente le degré moyen de polymérisation dans le polymère, et à titre d'agent porogène, le carbonate d'ammonium, le bicarbonate d'ammonium, l'oxalate d'ammonium ou leurs mélanges, et la mousse est une mousse à alvéoles fermés, contenant des groupes maléimides, comme le montre la spectroscopie infrarouge.

2. Procédé selon la revendication 1, dans lequel le motif A est l'anhydride maléique.

3. Procédé selon la revendication 1 ou 2, dans lequel le motif B est le styrène.

4. Procédé selon la revendication 1 à 3, dans lequel l'agent porogène est le bicarbonate d'ammonium.

5. Procédé selon les revendications 1 à 4, dans lequel l'agent porogène de type sel d'ammonium est utilisé conjointement avec du chlorodifluoroéthane.

6. Procédé selon les revendications 1 à 5, dans lequel la résine est mélangée avec l'agent porogène et le mélange est plastifié a chaud dans une extrudeuse à vis.

7. Mousse de résine à alvéoles fermés, extrudée et perfectionnée, qui est préparée à partir d'un copolymère éthylénique thermoplastique d'addition d'un anhydride cyclique d'acide carboxylique à insaturation éthylenique et d'un monomere à insaturation éthylénique et polymérisable par addition, par plastification à la chaleur du polymère, en presence de 0,5 à 20 parties en poids, par rapport à 100 parties en poids du polymère, d'un agent porogène de type sel d'ammonium, caractérisée en ce que le polymère d'addition éthylénique est constitué essentiellement des motifs répondant à la formule générale

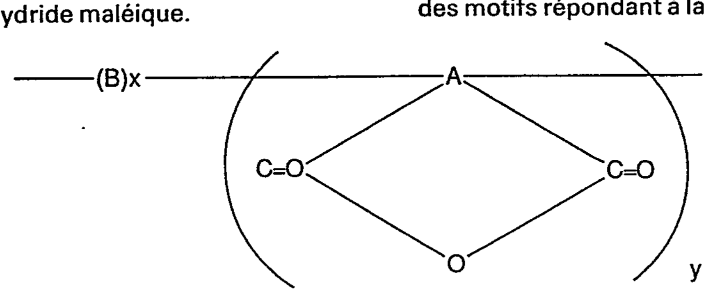

dans laquelle A est au moins un radical organique tétravalent possédant une première paire de valences sur des atomes de carbone voisins fixés aux groupes carbonyle et une seconde paire de valences sur des atomes de carbone voisins faisant partie de la chaîne polymère et provenant de la polymérisation par addition de 2 à 30 pour cent en poids, par rapport au poids du polymère, d'un anhydride cyclique d'un acide dicarboxylique à insaturation éthylénique, B est le motif polymérisé correspondant à au moins un monomère à insaturation éthylénique, polymérisable par addition, et x et y sont des nombres tels que leur rapport représente la proportion moyenne sur une base molaire des motifs respectifs dans le polymère et leur somme représente le degré moyen de polymérisation du polymère, l'agent porogène est constitué de carbonate d'ammonium, de bicarbonate d'ammonium, d'oxalate d'ammonium ou de leurs mélanges, et la mousse est une mousse à alvéoles fermés contenant des groupes maléimide déterminés par spectroscopie infrarouge.

8. Mousse selon la revendication 7, dans laquelle A est l'anhydride maléique.

9. Mousse selon la revendication 7 ou 8, dans laquelle le monomère B est le styrène.

10. Mousse selon les revendications 8 et 9, dans laquelle le copolymère est un copolymère (styrène/anhydride maléique) et la mousse est blanche et possède une structure alvéolaire uniforme.